# EUROPÄISCHE PATENTSCHRIFT

(11) **EP 3 107 771 B1**
(45) Veröffentlichungstag und Bekanntmachung des Hinweises auf die Patenterteilung: **08.11.2017**
(21) Anmeldenummer: 15701800.3
(22) Anmeldetag: 30.01.2015
(51) Int. Cl.: B60T 7/10

(54) **BETÄTIGUNGSVORRICHTUNG FÜR EINE FESTSTELLBREMSE**
ACTIVATION DEVICE FOR A PARKING BRAKE
DISPOSITIF D'ACTIONNEMENT POUR FREIN DE STATIONNEMENT

(30) Priorität: 21.02.2014 DE 202014100780 U
(43) Veröffentlichungstag der Anmeldung: 28.12.2016
(73) Patentinhaber: Power-Cast Light Metal Solutions GmbH & Co. KG, 73278 Schlierbach (DE)
(72) Erfinder: KALTENMAIER, Wolfgang, 73344 Gruibingen (DE)
(74) Vertreter: Ruckh, Rainer Gerhard
(86) Internationale Anmeldenummer: PCT/EP2015/051876
(87) Internationale Veröffentlichungsnummer: WO 2015/124398

(56) Entgegenhaltungen:
- EP-A1- 1 300 306
- DE-A1- 10 006 832
- DE-A1-102006 010 853
- DE-A1-102009 022 460
- JP-U- H0 651 037

## Beschreibung

Die Erfindung betrifft eine Betätigungsvorrichtung gemäß dem Oberbegriff des Anspruchs 1.

Eine derartige Betätigungsvorrichtung ist beispielsweise aus der DE 10 2009 022 460 A1 bekannt. Diese Betätigungsvorrichtung umfasst einen an einem Lagerbock schwenkbar gelagerten Handbremshebel, welcher mittels einer Festsetzeinrichtung in einer vorgegebenen Schwenkstellung fixierbar ist. Weiterhin umfasst die Betätigungsvorrichtung eine im Handbremshebel geführte und in Wirkverbindung mit der Festsetzeinrichtung stehende Betätigungsstange. Zur Ausbildung einer Schwenklagerung ist eine am Lagerbock drehbar gelagerte rohrförmige Aufnahme vorgesehen, mit welcher der Handbremshebel fest verbunden ist und an welcher ein Übertragungselement gelagert ist, mittels dessen die Schwenkstellung des Handbremshebels auf die Feststellbremse übertragbar ist. In den Hohlraum der rohrförmigen Aufnahme werden zwei Lagerbuchsen eingeführt, die an den jeweiligen Enden des Hohlraums lagefixiert sind. Dann wird in den Hohlraum ein Lagerrohr eingeführt, welches zudem in Bohrungen des Lagerbocks eingeführt wird und dort verstemmt wird.

Nachteilig bei dieser Schwenklagerung ist deren konstruktiv aufwändiger Aufbau. Auch die Montage der Schwenklagerung ist aufgrund der hohen Anzahl an Einzelteilen sowie des erforderlichen Verstemmens des Lagerrohrs als zusätzlichen Montageschritt unerwünscht aufwändig.

Aus der DE 10 2006 010 853 A1 ist eine Betätigungsvorrichtung für eine Feststellbremse bekannt, welche einen an einem Lagerbock schwenkbar gelagerten Handbremshebel und eine Festsetzeinrichtung aufweist. Die Festsetzeinrichtung umfasst ein am Lagerbock angeordnetes Sperrsegment und eine beweglich gelagerte Sperrklinke. Im Handbremshebel ist eine an die Sperrklinke gekoppelte Betätigungsstange vorgesehen. Zur Ausbildung der Schwenklagerung des Handbremshebels greifen an diesem angeordnete Lagerzapfen in Lagerbuchsen, welche auf dem Lagerbock aufgeclipst sind.

Die Schwenklagerung umfasst in diesem Fall zwar wenig Einzelteile. Nachteilig hierbei ist, dass die auf den Lagerbock aufgeclipsten Lagerbuchsen keine ausreichende Stabilität aufweisen, um den Handbremshebel sicher zu lagern.

Der Erfindung liegt die Aufgabe zugrunde, eine Betätigungsvorrichtung der eingangs genannten Art bereitzustellen, welche bei geringem konstruktivem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft eine Betätigungsvorrichtung für eine Feststellbremse und umfasst einen Lagerbock, einen Handbremshebel sowie eine Schwenklagerung. Mittels der Schwenklagerung ist der Handbremshebel schwenkbar am Lagerbock gelagert. Mit einer Festsetzeinrichtung ist der Handbremshebel in einer Schwenkstellung am Lagerbock fixierbar. Die Schwenklagerung ist von einer Achsaufnahme und zwei dieser zugeordneten Einsatzteilen gebildet, wobei die Achsaufnahme von einem Druckgussteil gebildet ist und ein Begrenzungselement aufweist. Zur Ausbildung der Schwenklagerung sind die Einsatzteile an gegenüberliegenden Enden der Achsaufnahme lagefixiert. Die Einsatzteile sind in Wirkverbindung mit dem Begrenzungselement stehend mit diesem oder miteinander verbunden.

Ein wesentlicher Vorteil der Erfindung besteht darin, dass mit einer geringen Anzahl an Einzelteilen eine Schwenklagerung geschaffen wird, mittels derer der Handbremshebel am Lagerbock geschwenkt werden kann. Weiter vorteilhaft ist, dass die Schwenklagerung schnell und mit wenigen Montageschritten montiert werden kann. Insbesondere kann die Schwenklagerung vorteilhaft derart ausgebildet sein, dass diese werkzeuglos montiert werden kann.

Ein weiterer wesentlicher Vorteil besteht darin, dass mit der Achsaufnahme und den Einsatzteilen eine stabile Schwenklagerung bereitgestellt wird, wobei besonders vorteilhaft ist, dass ein sicherer Halt am Lagerbock gegeben ist.

Durch die Ausbildung der Achsaufnahme als Druckgussteil kann diese genau und toleranzarm gefertigt werden, was eine wesentliche Voraussetzung für eine reproduzierbare Ausbildung der Schwenklagerung ist. Das Druckgussteil besteht allgemein aus einem metallischen Werkstoff, insbesondere aus Aluminium. Die der Achsaufnahme zugeordneten Einsatzteile bestehen vorteilhaft aus Kunststoff und können so besonders kostengünstig hergestellt werden. Insbesondere sind die Einsatzteile als Kunststoff-Spritzgussteile ausgebildet, die wie die Achsaufnahme hochgenau gefertigt werden.

Wesentlich bei der erfindungsgemäßen Schwenklagerung ist, dass die Achsaufnahme die Geometrie der Schwenklagerung vorgibt, wobei die Achsaufnahme durch die Ausbildung als Druckgussteil eine hohe Stabilität und Formgenauigkeit aufweist. Weiterhin wird durch das Begrenzungselement als Bestandteil des Druckgussteils ein exakter Bezugspunkt für die Montagepositionen der Einsatzteile vorgegeben.

Die Einsatzteile können dabei durch einfaches Aufstecken, Einstecken oder Aufsetzen an der Achsaufnahme montiert werden.

Gemäß einer konstruktiv besonders vorteilhaften Ausgestaltung der Erfindung ist die Achsaufnahme rohrförmig ausgebildet, wobei die Einsatzteile an gegenüberliegenden Enden der Achsaufnahme in diese einsetzbar sind.

Dabei weist die Achsaufnahme eine einen Hohlraum begrenzende Innenwand auf, an welcher das Begrenzungselement ausgebildet ist.

Insbesondere weist die Achsaufnahme eine hohlzylindrische Form auf.

Die Geometrien der Einsatzeile sind dann an die Geometrie der Achsaufnahme angepasst. Vorteilhaft weist jedes Einsatzteil ein zylindrisches Körperteil auf, das mit geringem Spiel im Hohlraum der Achsaufnahme geführt ist. An einem Ende des Körperteils ist ein Kopfteil vorgesehen, dessen Durchmesser größer ist als der Durchmesser des Hohlraums.

Besonders vorteilhaft sind die Einsatzteile identisch ausgebildet.

Die Achsaufnahme ist dann entsprechend spiegelsymmetrisch ausgebildet, wobei sich das Begrenzungselement im Zentrum der Achsaufnahme, durch welches die Spiegelebene verläuft, befindet.

Gemäß einer besonders vorteilhaften Ausführungsform der Erfindung sind die Achsaufnahme und der Handbremshebel einstückig ausgebildet und von einem Druckgussteil gebildet.

Diese Ausführungsform ist fertigungstechnisch besonders günstig, da durch die einstückige Ausbildung der Achsaufnahme und des Handbremshebels die Zahl der Einzelteile der Betätigungsvorrichtung gering gehalten werden kann.

Bei dieser Ausführungsform wird die Achsaufnahme mit ihren Einsatzteilen mit dem Handbremshebel zusammen am feststehenden Lagerbock geschwenkt, wenn mit der Betätigungsvorrichtung die Feststellbremse bestätigt werden soll.

Vorteilhaft sind die Einsatzteile in Bohrungen des Lagerbocks geführt, wodurch der Handbremshebel am Lagerbock schwenkbar gelagert ist.

Prinzipiell kann auch die Achsaufnahme Bestandteil des Lagerbocks sein und dann ein mit dem Lagerbock feststehendes Teil bilden. In diesem Fall kann der Handbremshebel Befestigungslaschen mit Bohrungen aufweisen, wobei dann die Einsatzteile in diese Bohrungen des Handbremshebels greifen um so die Schwenklagerung des Handbremshebels auszubilden.

Das Begrenzungselement bildet im einfachsten Fall nur einen definierten Anschlag, gegen welchen die Einsatzteile bei der Montage an der Achsaufnahme geführt sind.

Für den Fall, dass die Achsaufnahme rohrförmig ausgebildet ist, kann dieser Anschlag von einem ringförmigen Vorsprung ausgebildet sein, der von der zylindrischen Innenwand, die den Hohlraum der Achsaufnahme begrenzt, hervorsteht.

In diesem Fall weisen die Einsatzteile an ihren Vorderenden bevorzugt Befestigungselemente auf, mittels derer die Einsatzteile am Anschlag anliegend miteinander verbunden werden können. Beispielsweise können die Befestigungselemente einen Bajonettverschluss ausbilden.

Alternativ können separate Befestigungsmittel vorgesehen sein, mittels derer die in die Achsaufnahme eingeführten Einsatzteile verbunden sind.

Insbesondere sind die Befestigungsmittel von Schraubverbindungen gebildet.

Gemäß einer vorteilhaften Ausgestaltung der Erfindung kann das Begrenzungselement nicht nur einen Anschlag, sondern auch gleichzeitig ein Befestigungselement für die Einsatzteile ausbilden. Beispielsweise können die Befestigungsmittel der Einsatzteile als Rasthaken ausgebildet sein.

Diese Rasthaken können dann am Begrenzungselement eingerastet werden.

Die Erfindung wird im Folgenden anhand der Zeichnungen erläutert. Es zeigen:
- Figur 1:: Ausführungsbeispiel der erfindungsgemäßen Betätigungsvorrichtung für eine Feststellbremse.
- Figur 2:: Teildarstellung der Betätigungsvorrichtung gemäß Figur 1 mit den Komponenten einer Schwenklagerung für den Handbremshebel dieser Betätigungsvorrichtung.

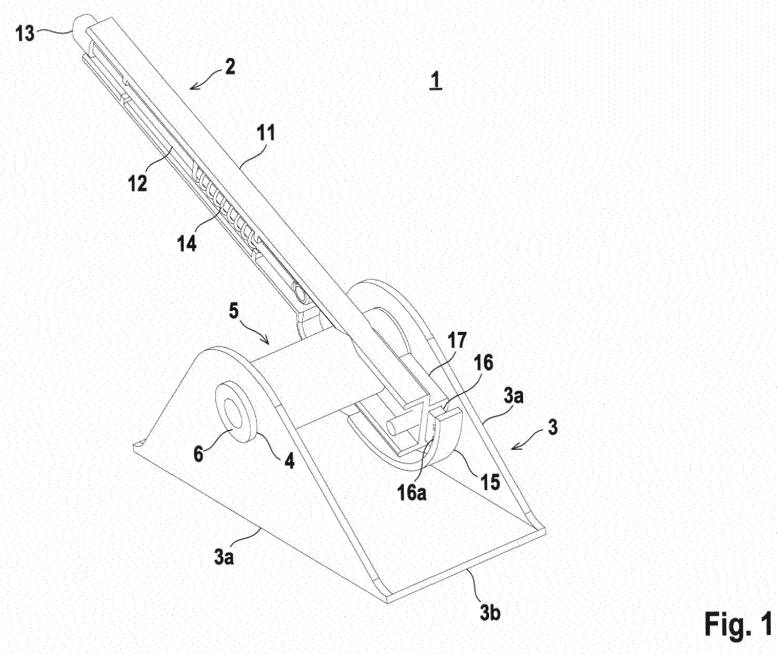

Figur 1 zeigt schematisch ein Ausführungsbeispiel der erfindungsgemäßen Betätigungsvorrichtung 1 für eine Feststellbremse eines Kraftfahrzeugs.

Die Betätigungsvorrichtung 1 umfasst einen Handbremshebel 2 und einen Lagerbock 3. Der Handbremshebel 2 ist um eine horizontale Achse am Lagerbock 3 schwenkbar gelagert. Der Lagerbock 3 umfasst zwei identisch ausgebildete Schenkel 3a und ein Bodenteil 3b. Die identisch ausgebildeten Schenkel 3a verlaufen parallel und in Abstand zueinander. Die Schenkel 3a stehen jeweils im rechten Winkel vom Bodenteil 3b hervor und sind einstückig mit diesem ausgebildet. Als Aufnahmen für eine Schwenklagerung des Handbremshebels 2 weist jeder Schenkel 3a eine Bohrung 4 auf. Die identisch ausgebildeten Bohrungen 4 sind gegenüberliegend angeordnet.

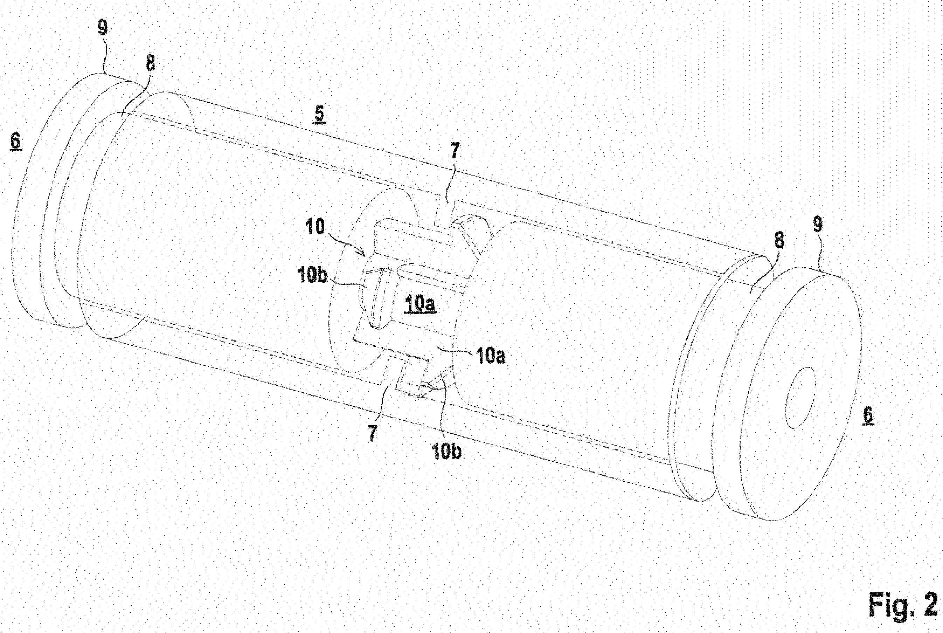

Die erfindungsgemäße Schwenklagerung, deren Komponenten in Figur 2 separat dargestellt sind, umfasst eine rohrförmige Achsaufnahme 5 sowie zwei dieser zugeordneten Einsatzteile 6. Die Achsaufnahme 5 ist von einem Druckgussteil gebildet. Im vorliegenden Fall sind die Achsaufnahme 5 und der Handbremshebel 2 einteilig ausgebildet und bestehen aus einem Druckgussteil. Das Druckgussteil besteht aus einem metallischen Werkstoff, insbesondere aus Magnesium oder Aluminium. Die Einsatzteile 6 sind im vorliegenden Fall als Kunststoff-Spritzgussteile ausgebildet.

Die Achsaufnahme 5 weist eine hohlzylindrische Form auf, wobei an deren kreiszylindrischen Außenseite der Handbremshebel 2 ausmündet. Die einen Hohlraum umschließende Innenwand der Achsaufnahme 5 ist ebenfalls kreiszylindrisch ausgebildet. Im Zentrum der Achsaufnahme 5 mündet an dieser Innenwand ein ringförmiger Vorsprung aus, der ein Begrenzungselement 7 bildet. Das Begrenzungselement 7 ist Bestandteil des Druckgussteils.

Die Einsatzteile 6 sind identisch ausgebildet. Jedes Einsatzteil 6 umfasst einen zylindrischen Körperteil 8, dessen Außendurchmesser an den Innendurchmesser des Hohlraums der Achsaufnahme 5 angepasst ist. An dem hinteren Ende des Körperteils 8 schließt ein kreisscheibenförmiges Kopfteil 9 an, dessen Durchmesser größer ist als der Außendurchmesser des Körperteils 8.

Am vorderen Ende des Einsatzteils 6 sind mehrere, identisch ausgebildete Rasthaken 10 vorgesehen. Die Längsachsen der Rasthaken 10 verlaufen in axialer Richtung des Einsatzteils 6 parallel zueinander. Jeder Rasthaken 10 weist einen langgestreckten stabförmigen Grundkörper 10a und eine an dessen vorderem Ende angebrachte Rastnase 10b auf.

Zur Montage der Schwenklagerung wird die Achsaufnahme 5 zwischen die Bohrungen 4 des Lagerbocks 3 eingebracht, so dass der Hohlraum der Achsaufnahme 5 an diese Bohrungen 4 anschließt. Dann werden die Einsatzteile 6 zuerst jeweils in eine Bohrung 4 des Lagerbocks 3 und dann an dem angrenzenden längsseitigen Ende der Achsaufnahme 5 in deren Hohlraum eingeführt. Der eine Bohrung 4 begrenzende Rand des Lagerbocks 3 liegt somit zwischen dem Kopfteil 9 des jeweiligen Einsatzteils 6 und dem längsseitigen Rand der Achsaufnahme 5. Die Längen der Einsatzteile 6 sind so an die Länge der Achsaufnahme 5 angepasst, dass die Einsatzteile 6 jeweils gerade so weit in den Hohlraum der Achsaufnahme 5 eingeschoben werden können, dass die Rasthaken 10 am Begrenzungselement 7 der Achsaufnahme 5 einrasten. Die Grundkörper 10a der Rasthaken 10 sind dabei elastisch verformbar, so dass sich diese aufbiegen können, wenn die Rastnase 10b über das Begrenzungselement 7 geschoben wird. Sobald die Rastnasen 10b hinter dem Begrenzungselement 7 einrasten, sind die Einsatzteile 6 am Begrenzungselement 7 befestigt, das heißt das Begrenzungselement 7 bildet im vorliegenden Fall auch ein Befestigungselement, an welchem die Einsatzteile 6 mit den Rasthaken 10 befestigt sind.

Bei in die Achsaufnahme 5 eingeführtem Einsatzteil 6 ist dessen Körperteil 8 mit geringem Spiel im Hohlraum der Achsaufnahme 5 geführt. Die Rasthaken 10 der Einsatzteile 6 sind in Abständen zueinander so angeordnet, dass bei am Begrenzungselement 7 fixiertem Einsatzteil 6 die Rasthaken 10 eines Einsatzteils 6 gerade in den Lücken zwischen zwei Rasthaken 10 des anderen Einsatzteils 6 liegen. Weiterhin ist bei an dem Begrenzungselement 7 befestigten Einsatzteil 6 der Abstand zwischen einem längsseitigen Rand der Achsaufnahme 5 und dem Kopfteil 9 eines Einsatzteils 6 so dimensioniert, dass der dazwischen liegende Schenkel 3a des Lagerbocks 3 mit geringem Spiel geführt ist. Somit kann der Handbremshebel 2 mit der Achsaufnahme 5 reibungsarm am Lagerbock 3 geschwenkt werden.

Die jeweilige Schwenkstellung des Handbremshebels 2 wird über eine nicht darstellte Zugstange oder dergleichen auf die ebenfalls nicht dargestellte Feststellbremse des Kraftfahrzeugs, in dem die Betätigungsvorrichtung 1 eingebaut ist, übertragen.

Der Handbremshebel 2 weist einen mit der Achsaufnahme 5 einstückig ausgebildeten oder zumindest fest mit diesem verbundenen stangenförmigen Grundkörper 11 auf. Der Grundkörper 11 ist im vorliegenden Fall von einem seitlich offenen Profil gebildet. In dem langgestreckten vorderen Bereich des Grundkörpers 11, der über den Lagerbock 3 hervorsteht, ist eine Betätigungsstange 12 gelagert. An dem vorderen Ende der Betätigungsstange 12 ist ein über das Vorderende des Grundkörpers 11 hervorstehender Druckknopf 13 gelagert. Die Betätigungsstange 12 kann durch Betätigung des Druckknopfs 13 gegen die Federkraft einer Feder 14, die im Grundkörper 11 gelagert ist und die Betätigungsstange 12 umschließt, verschoben werden. Sobald der Druckknopf 13 losgelassen wird, wird die Betätigungsstange 12 durch die Federkraft der Feder 10 wieder in ihre Ausgangsstellung zurückbewegt.

Der Handbremshebel 2, insbesondere dessen Grundkörper 11, ist im fertig montierten Zustand mit einer nicht dargestellten Verschalung umhüllt, deren Zur Fixierung des Handbremshebels 2 in einer bestimmten Schwenkstellung ist eine Festsetzeinrichtung vorgesehen. Die Festsetzeinrichtung umfasst ein Sperrsegment 15 am Lagerbock 3 und eine Sperrklinke 16 am Handbremshebel 2.

Die Sperrklinke 16 besteht im vorliegenden Fall aus einem Kunststoff Spritzgussteil. An ihrem vorderen, dem Sperrsegment 15 zugewandten Rand weist die Sperrklinke 16 mehrere Rastzähne 16a (Figur 1) auf. Die Sperrklinke 16 ist in einer Aufnahme 17, die Bestandteil des Handbremshebels 2 ist und an dessen Grundkörper 11 seitlich anschließt, in axialer Richtung verschiebbar gelagert. Die Verschieberichtung der Sperrklinke 16 verläuft parallel zur Verschieberichtung der Betätigungsstange 12. Die Sperrklinke 16 ist über ein nicht gesondert dargestelltes Kopplungsglied mit der Betätigungsstange 12 verbunden. Dadurch wird, wenn der Druckknopf 13 von einer Bedienperson gedrückt wird, durch die dadurch bewirkte Auslenkung der Betätigungsstange 12 die Sperrklinke 16 in die Aufnahme 17 eingeschoben. Lässt die Bedienperson den Druckknopf 13 los, so wird über die Rückstellbewegung der Betätigungsstange 12 die Sperrklinke 16 wieder aus der Aufnahme 17 herausgeschoben.

Das Sperrsegment 15 ist an der Innenseite eines Schenkels 3a des Lagerbocks 3 angeordnet und zwar derart, dass das Sperrsegment 15 in geringem Abstand der Sperrklinke 16 gegenüberliegt.

Das Sperrsegment 15 weist eine innenliegende Verzahnung auf einer konkaven, kreiszylindrischen Fläche an der der Sperrklinke 16 zugewandten Innenseite des Sperrsegments 15 auf.

Die Festsetzeinrichtung der Betätigungsvorrichtung 1 gemäß Figur 1 funktioniert derart, dass dann, wenn der Druckknopf 13 nicht betätigt ist, die Betätigungsstange 12 durch die Feder 14 eine Kraft auf die Sperrklinke 16 ausübt, so dass diese aus der Aufnahme 17 herausgeschoben ist und mit Anpressdruck gegen das Sperrsegment 15 gedrückt ist, so dass die Rastzähne 16a der Sperrklinke 16 in die Zähne eines Teilbereichs der Zahnung des Sperrsegments 15 greifen. dass diese aus der Aufnahme 17 herausgeschoben ist und mit Anpressdruck gegen das Sperrsegment 15 gedrückt ist, so dass die Rastzähne 16a der Sperrklinke 16 in die Zähne eines Teilbereichs der Zahnung des Sperrsegments 15 greifen. Dadurch ist der Handbremshebel 2 in einer Schwenkstellung am Lagerbock 3 fixiert.

Soll die Festsetzeinrichtung gelöst werden, um den Handbremshebel 2 in eine andere Schwenkstellung überführen zu können, drückt eine Bedienperson den Druckknopf 13. Die dadurch bewirkte Verschiebung der Betätigungsstange 12 wird über das Kopplungsglied in eine Linearbewegung der Sperrklinke 16 derart umgesetzt, dass diese Sperrklinke 16 in die Aufnahme 17 eingefahren wird und so die Rastzähne 16a der Sperrklinke 16 nicht mehr in Eingriff mit den Zähnen des Sperrsegments 15 sind. Dann kann die Bedienperson den Handbremshebel 2 in die gewünschte neue Schwenkposition schwenken. Anschließend lässt die Bedienperson den Druckknopf 13 los. Dadurch wird die Betätigungsstange 12 durch die Federkraft der Feder 14 in ihre Ausgangsstellung bewegt, wodurch die Sperrklinke 16 gegen die Sperrsegmente 15 bewegt wird, so dass die Rastzähne 16a der Sperrklinke 16 mit Anpressdruck gegen Zähne eines neuen Teilbereichs der Zahnung gedrückt werden. Damit ist die neue Schwenkstellung des Handbremshebels 2 fixiert.

Durch Einbringen des Handbremshebels 2 in eine einer Ruhestellung bildende Schwenkstellung kann die Feststellbremse gelöst werden. durch ein Schwenken des Handbremshebels 2 in eine vorzugsweise oberhalb der Ruhestellung liegende Schwenkstellung kann die Feststellbremse angezogen, das heißt betätigt werden.

### Bezugszeichenliste

- (1): Betätigungsvorrichtung
- (2): Handbremshebel
- (3): Lagerbock
- (3a): Schenkel
- (3b): Bodenteil
- (4): Bohrung
- (5): Achsaufnahme
- (6): Einsatzteil
- (7): Begrenzungselement
- (8): Körperteil
- (9): Kopfteil
- (10): Rasthaken
- (10a): Grundkörper
- (10b): Rastnase
- (11): Grundkörper
- (12): Betätigungsstange
- (13): Druckknopf
- (14): Feder
- (15): Sperrsegment
- (16): Sperrklinke
- (16a): Rastzähne
- (17): Aufnahme

## Patentansprüche

1. Betätigungsvorrichtung (1) für eine Feststellbremse, mit einem Lagerbock (3), einem Handbremshebel (2) sowie einer Schwenklagerung, mittels derer der Handbremshebel (2) schwenkbar am Lagerbock (3) gelagert ist, und mit einer Festsetzeinrichtung (15, 16), mittels derer der Handbremshebel (2) in einer Schwenkstellung am Lagerbock (3) fixierbar ist, **dadurch gekennzeichnet, dass** die Schwenklagerung von einer Achsaufnahme (5) und zwei dieser zugeordneten Einsatzteilen (6) gebildet ist, wobei die Achsaufnahme (5) von einem Druckgussteil gebildet ist und ein Begrenzungselement (7) aufweist, wobei zur Ausbildung der Schwenklagerung die Einsatzteile (6) an gegenüberliegenden Enden der Achsaufnahme (5) lagefixiert sind, und wobei die Einsatzteile (6) in Wirkverbindung mit dem Begrenzungselement (7) stehend mit diesem oder miteinander verbunden sind.

2. Betätigungsvorrichtung nach Anspruch 1, **dadurch gekennzeichnet, dass** die Achsaufnahme (5) rohrförmig ausgebildet ist, wobei die Einsatzteile (6) an gegenüberliegenden Enden der Achsaufnahme (5) in diese einsetzbar sind.

3. Betätigungsvorrichtung nach Anspruch 2, **dadurch gekennzeichnet, dass** die Achsaufnahme (5) eine einen Hohlraum begrenzende Innenwand aufweist, an welcher das Begrenzungselement (7) ausgebildet ist.

4. Betätigungsvorrichtung nach einem der Ansprüche 2 oder 3, **dadurch gekennzeichnet, dass** die Achsaufnahme (5) eine hohlzylindrische Form aufweist.

5. Betätigungsvorrichtung nach einem der Ansprüche 2 bis 4, **dadurch gekennzeichnet, dass** jedes Einsatzteil (6) ein zylindrisches Körperteil (8) aufweist, das mit geringem Spiel im Hohlraum der Achsaufnahme (5) geführt ist, und dass an einem Ende des Körperteils (8) ein Kopfteil (9) vorgesehen ist, dessen Durchmesser größer ist als der Durchmesser des Hohlraums.

6. Betätigungsvorrichtung nach einem der Ansprüche 1 bis 5, **dadurch gekennzeichnet, dass** die Einsatzteile (6) aus Kunststoff bestehen, und dass die Achsaufnahme (5) und der Handbremshebel (2) einstückig ausgebildet und von einem Druckgussteil gebildet sind.

7. Betätigungsvorrichtung nach Anspruch 6, **dadurch gekennzeichnet, dass** die Einsatzteile (6) in Bohrungen (4) des Lagerbocks (3) geführt sind, wodurch der Handbremshebel (2) am Lagerbock (3) schwenkbar gelagert ist.

8. Betätigungsvorrichtung nach einem der Ansprüche 1 bis 7, **dadurch gekennzeichnet, dass** die Einsatzteile (6) identisch ausgebildet sind.

9. Betätigungsvorrichtung nach einem der Ansprüche 1 bis 8, **dadurch gekennzeichnet, dass** das insbesondere ringförmig ausgebildete Begrenzungselement (7) einen Anschlag für beide Einsatzteile (6) bildet.

10. Betätigungsvorrichtung nach einem der Ansprüche 1 bis 9, **dadurch gekennzeichnet, dass** das Begrenzungselement (7) ein Befestigungselement zur Fixierung der Einsatzteile (6) bildet.

11. Betätigungsvorrichtung nach einem der Ansprüche 1 bis 10, **dadurch gekennzeichnet, dass** an den Einsatzteilen (6) jeweils wenigstens ein Befestigungselement vorgesehen ist, wobei die Einsatzteile (6) mit ihren Befestigungselementen am Begrenzungselement (7) befestigt sind, oder die Einsatzteile (6) mit ihren Befestigungselementen miteinander verbunden sind.

12. Betätigungsvorrichtung nach Anspruch 11, **dadurch gekennzeichnet, dass** die Befestigungselemente der Einsatzteile (6) als Rasthaken (10) ausgebildet sind.

## Claims

1. Activation device (1) for a parking brake with a mounting block (3), a handbrake lever (2), a pivot bearing by means of which the handbrake lever (2) is pivotably mounted on the mounting block (3), and a fixing device (15, 16) by means of which the handbrake lever (2) is fixable in a pivot setting at the mounting block (3), **characterised in that** the pivot bearing is formed by an axle mount (5) and two insert members (6) associated therewith, wherein the axle mount (5) is formed by a cast component and a limiter element (7), wherein for formation of the pivot bearing the insert members (6) are positionally fixed at opposite ends of the axle mount (5) and wherein the insert members (6) disposed in operative connection with the limiter element (7) are connected with this or with one another.

2. Activation device according to claim 1, **characterised in that** the axle mount (5) is formed to be tubular, wherein the insert members (6) are insertable into the axle mount (5) at opposite ends thereof.

3. Activation device according to claim 2, **characterised in that** the axle mount (5) has an inner wall which bounds a cavity and at which the limiter element (7) is formed.

4. Activation device according to one of claims 2 and 3, **characterised in that** the axle mount (5) has a hollow-cylindrical form.

5. Activation device according to any one of claims 2 to 4, **characterised in that** each insert member (6) comprises a cylindrical body part (8) guided in the cavity of the axle mount (5) with small play and that a head part (9), the diameter of which is larger than the diameter of the cavity, is provided at one end of the body part (8).

6. Activation device according to any one of claims 1 to 5, **characterised in that** the insert members (6) consist of plastics material and that the axle mount (5) and the handbrake lever (2) are constructed integrally and formed by a cast component.

7. Activation device according to claim 6, **characterised in that** the insert members (6) are guided in bores (4) of the mounting block (3), whereby the handbrake lever (2) is pivotably mounted on the mounting block (3).

8. Activation device according to any one of claims 1 to 7, **characterised in that** the insert members (6) are of identical construction.

9. Activation device according to any one of claims 1 to 8, **characterised in that** the limiter element (7), which is, in particular of annular construction, forms an abutment for the two insert members (6).

10. Activation device according to any one of claims 1 to 9, **characterised in that** the limiter element (7) forms a securing element for fixing the insert members (6).

11. Activation device according to any one of claims 1 to 10, **characterised in that** at least one respective securing element is provided at each of the insert members (6), wherein the insert members (6) are secured by the securing elements thereof to the limiter element (7) or the insert members (6) are connected together by the securing elements thereof.

12. Activation device according to claim 11, **characterised in that** the securing elements of the insert members (6) are constructed as detent hooks (10).

## Revendications

1. Dispositif d'actionnement (1) pour un frein de stationnement, avec un palier support (3), un levier de frein à main (2) ainsi qu'un ensemble de palier de pivotement, au moyen duquel le levier de frein à main (2) est monté à pivotement sur le palier support (3), et avec un système de blocage (15, 16), au moyen duquel le levier de frein à main (2) peut être immobilisé dans une position pivotée sur le palier support (3), **caractérisé en ce que** l'ensemble de palier de pivotement est formé par un logement d'axe (5) et deux pièces d'insertion (6) associées à celui-ci, sachant que le logement d'axe (5) est formé par une pièce coulée sous pression et présente un élément limiteur (7), sachant qu'afin de former l'ensemble de palier de pivotement, les pièces d'insertion (6) sont montées en position fixe aux extrémités opposées du logement d'axe (5), et sachant que les pièces d'insertion (6) sont, en se trouvant en liaison fonctionnelle avec l'élément limiteur (7), reliées à celui-ci ou entre elles.

2. Dispositif d'actionnement selon la revendication 1, **caractérisé en ce que** le logement d'axe (5) est réalisé tubulaire, sachant que les pièces d'insertion (6) peuvent être insérées dans le logement d'axe (5) aux extrémités opposées de celui-ci.

3. Dispositif d'actionnement selon la revendication 2, **caractérisé en ce que** le logement d'axe (5) présente une paroi intérieure délimitant un espace creux, paroi sur laquelle est formé l'élément limiteur (7).

4. Dispositif d'actionnement selon l'une des revendications 2 ou 3, **caractérisé en ce que** le logement d'axe (5) présente une forme cylindrique creuse.

5. Dispositif d'actionnement selon l'une des revendications 2 à 4, **caractérisé en ce que** chaque pièce d'insertion (6) présente une partie de corps cylindrique (8), qui est guidée avec un faible jeu dans l'espace creux du logement d'axe (5), et **en ce qu'**une partie de tête (9), dont le diamètre est légèrement supérieur au diamètre de l'espace creux, est prévue à une extrémité de la partie de corps (8).

6. Dispositif d'actionnement selon l'une des revendications 1 à 5, **caractérisé en ce que** les pièces d'insertion (6) sont réalisées en matière plastique, et **en ce que** le logement d'axe (5) et le levier de frein à main (2) sont réalisés d'un seul tenant et sont formés par une pièce coulée sous pression.

7. Dispositif d'actionnement selon la revendication 6, **caractérisé en ce que** les pièces d'insertion (6) sont guidées dans des perçages (4) du palier support (3), de sorte que le levier de frein à main (2) est monté à pivotement sur le palier support (3).

8. Dispositif d'actionnement selon l'une des revendications 1 à 7, **caractérisé en ce que** les pièces d'insertion (6) sont réalisées identiques.

9. Dispositif d'actionnement selon l'une des revendications 1 à 8, **caractérisé en ce que** l'élément limiteur (7), réalisé notamment annulaire, forme une butée pour les deux pièces d'insertion (6).

10. Dispositif d'actionnement selon l'une des revendications 1 à 9, **caractérisé en ce que** l'élément limiteur (7) forme un élément de fixation pour l'immobilisation des pièces d'insertion (6).

11. Dispositif d'actionnement selon l'une des revendications 1 à 10, **caractérisé en ce qu'**au moins un élément de fixation est prévu sur chacune des pièces d'insertion (6), sachant que les pièces d'insertion (6) sont fixées par leurs éléments de fixation sur l'élément limiteur (7), ou que les pièces d'insertion (6) sont reliées entre elles par leurs éléments de fixation.

12. Dispositif d'actionnement selon la revendication 11, **caractérisé en ce que** les éléments de fixation des pièces d'insertion (6) sont réalisés sous la forme de crochets d'enclenchement (10).
